Europäisches Patentamt

**European Patent Office**

**Office européen des brevets**

(19)

(11) Veröffentlichungsnummer: **0 222 077**
**B1**

(12)

# EUROPÄISCHE PATENTSCHRIFT

(45) Veröffentlichungstag der Patentschrift:
14.11.90

(21) Anmeldenummer: 86111253.0

(22) Anmeldetag: 14.08.86

(51) Int. Cl.⁵: **G01P 3/36**, G01C 19/64

(54) **Vorrichtung zur Messung der Drehgeschwindigkeit.**

(30) Priorität: 21.09.85 DE 3533695

(43) Veröffentlichungstag der Anmeldung:
20.05.87 Patentblatt 87/21

(45) Bekanntmachung des Hinweises auf die Patenterteilung:
14.11.90 Patentblatt 90/46

(84) Benannte Vertragsstaaten:
DE FR GB IT

(56) Entgegenhaltungen:
EP-A- 0 092 831
EP-A- 0 113 890
EP-A- 0 123 499
DE-A- 2 934 794
DE-A- 3 001 721
DE-A- 3 028 821

(73) Patentinhaber: TELDIX GmbH, Grenzhöfer
Weg 36 Postfach 105608, D-6900 Heidelberg 1(DE)

(72) Erfinder: Baron, Klaus Uwe, Dr. rer.nat.,
Turnerstrasse 11, D-6900 Heidelberg(DE)
Erfinder: Kiesel, Eberhard, Dipl.-Phys., Friedrichsfelder
Strasse 19, D-6803 Edingen(DE)

(74) Vertreter: Kammer, Arno, Dipl.-ing., TELDIX GmbH
Postfach 10 56 08 Grenzhöfer Weg 36,
D-6900 Heidelberg 1(DE)

## Beschreibung

Stand der Technik

Die Erfindung geht aus von einer Vorrichtung zur Messung der Drehgeschwindigkeit nach der Gattung des Hauptanspruchs.

In der DE-OS 3 040 514 wird ein Phasenmodulator beschrieben, dem ein von einem Frequenzgenerator erzeugtes Modulationssignal zugeführt wird. Das von der Auswerteeinrichtung über einen Photodetektor empfangene Signal wird bei zwei Frequenzen $f_1$, $f_2$ ausgewertet, derart, daß durch diese Auswertung einerseits ein Signal entsteht, das die Sagnac-Phase beinhaltet und andererseits ein Steuerungs- bzw. Regelsignal zur Beeinflussung des Frequenzgenerators. Damit wird schließlich wieder das Modulationssignal am Phasenmodulator beeinflußt. Zweck dieser Maßnahme soll eine möglichst gute Konstanthaltung der Modulation und damit eine genauere Signalauswertung sein. Hierbei darf jedoch nicht verkannt werden, daß gerade Steuerungs- und Regelkreise beispielsweise eine Temperaturdrift aufweisen, außerdem kann mit diesem Verfahren immer nur eine Auswertefrequenz auf einem optimalen Arbeitspunkt gehalten werden, wobei auch hier die Amplitude der Besselfunktion 1. Ordnung $J_1$ nur einen sehr geringen Hub aufweist.

Aus der DE-OS 3 028 821 ist ein mit Hilfe von Lichtleitfasern hergestelltes Ringinterferometer bekannt, bei dem in den Lichtweg der Lichtleitfaser zwei Phasenmodulatoren eingefügt sind. Die beiden Phasenmodulatoren werden von verschiedenen Generatoren angesteuert und erzeugen unterschiedliche Phasenmodulationen.

In einer weiteren Ausführungsform ist nur ein Phasenmodulator vorgesehen. Die Signale zweier Generatoren werden bei dieser Ausführungsform in einem Verstärker zu einem Summensignal addiert, welches dann den Phasenmodulator steuert.

Bei der erfindungsgemäßen Vorrichtung zur Messung der Drehgeschwindigkeit werden zusätzlich die Modulationswerte (Frequenzen und Hub) der beiden verwendeten Modulationssignale derart gewählt, daß die Besselfunktionen 1. Ordnung und 2. Ordnung jeweils ein Maximum aufweisen.

Eine Ausgestaltung der Erfindung schlägt vor, beide Modulationsfrequenzen überlagert auf eine einzige Modulationseinrichtung zugeben. Alternativ hierzu sind auch zwei Modulationseinrichtungen einsetzbar die jeweils mit einer Frequenz angesteuert werden.

Sind die Modulationseinrichtungen wie weiterbildungsgemäß vorgeschlagen thermisch miteinander verbunden, so läßt sich eine Temperaturdrift des Ausgangssignals, wie sie bei Temperaturänderungen der Einzelkomponenten auftreten würden, unterdrücken.

Die Modulationseinrichtung ist beispielsweise aus piezoelektrischen Elementen aufgebaut (siehe hierzu EP-A 123 499) kann aber auch aus integriert-optischen Modulatoren bestehen. Die Erfindung wird nachfolgend anhand mehrerer Ausführungsbeispiele näher erläutert.

Es zeigen:

Fig. 1 und Fig. 2 den Aufbau von Meßeinrichtungen für die Drehgeschwindigkeit (Faserkreisel) nach dem Stand der Technik,
Fig. 3 eine Modulationseinrichtung mit überlagerten Frequenzen,
Fig.3a eine Modulationseinrichtung mit zwei Modulatoren,
Fig. 4 den graphischen Verlauf der Besselfunktionen.

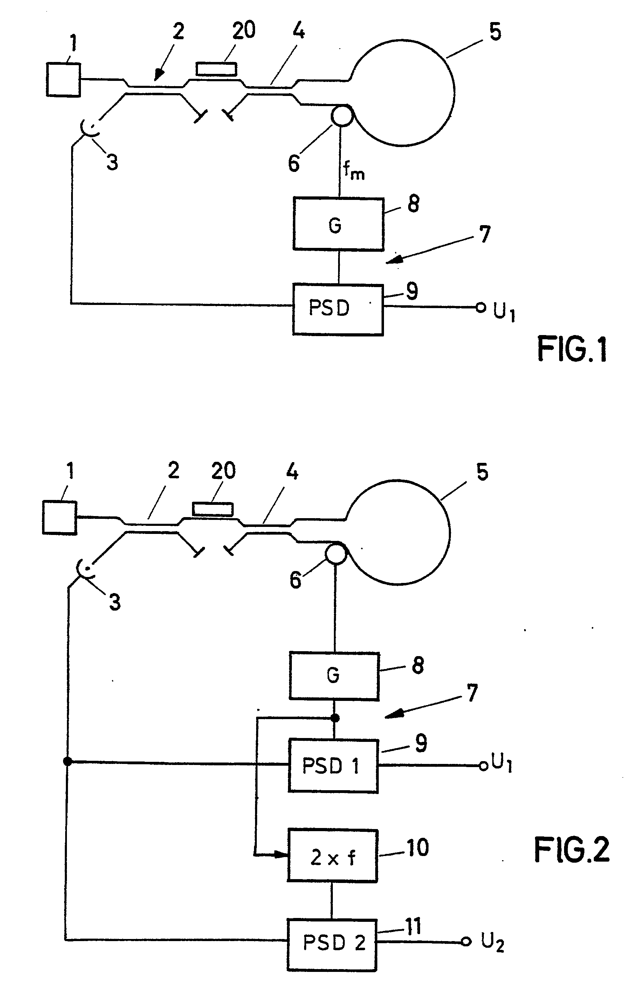

Der in Fig. 1 gezeigte Faserkreisel besteht aus einer Laserdiode 1, den Strahlteilern 2 und 4 mit dazwischenliegendem Polarisator 20 und einer an 2 angeschlossenen Photodiode 3, einer aus wenigstens einer Windung bestehenden Lichtleitfaser 5, einem Modulator 6 und einer Auswerteeinrichtung 7. Der Aufbau des Faserkreisels in Fig. 2 ist mit diesem identisch. Die Auswerteeinrichtung 7 beinhaltet nach Fig. 1 einen Frequenzgenerator 8, dessen Signal dem Modulator 6 und einer phasenempfindlichen Gleichrichterschaltung 9 zugeführt wird.

Für den phasenempfindlichen Nachweis von Drehgeschwindigkeiten bzw. Drehraten ist es erforderlich, die Phasenlage der sich in der Lichtleitfaser 5 ausbreitenden Lichtwellen mittels der Modulators 6 zu modulieren. Beispielsweise besteht der Modulator 6 aus einem piezoelektrischen Körper, um den eine oder mehrere Windungen der Lichtleitfaser 5 gewickelt sind und der bei Ansteuerung mit dem Frequenzgenerator 8 die Länge der Lichtleitfaser 5 moduliert. Der phasenempfindlichen Gleichrichterschaltung wird das von der Photodiode detektierte Signal und als Referenzsignal die von dem Generator gebildete Frequenz $f_m$ zugeführt.

Nach phasenempfindlicher Gleichrichtung des Detektorsignals auf der Modulationsfrequenz $f_m$ steht das der Drehrate proportionale Ausgangssignal $U_1$ zur Verfügung.

$$U_1 \sim J_1(2\Psi_m) \cdot \sin k\Omega \qquad (1)$$

$J_1$ = Besselfunktion 1. Ordnung
$2\Psi_m$ = Modulationshub

K = Konstante

$\Omega$ = Drehrate

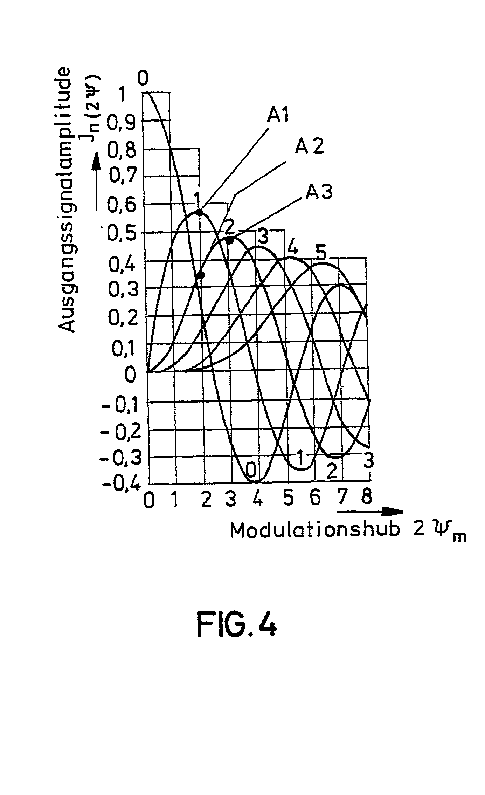

Für höchste Empfindlichkeit muß $J_1(2\Psi_m)$ in Gleichung (1) maximal werden, was durch Einstellen des Modulationshubes $2\Psi_m$ erreicht wird. Dies läßt sich am besten an Fig. 4 verdeutlichen. Hier zeigt die x-Achse den Modulationshub des Modulators und die y-Achse die Ausgangssignalamplitude. Dargestellt sind die Besselfunktionen n-ter Ordnung. Aus der Figur geht hervor, daß das Maximum der Besselfunktion 1. Ordnung bei einem Modulationshub $2\Psi$ von 1,85 liegt.

Von besonderem Interesse für verschiedene Anwendungen (z. B. Meßbereichserweiterung, Skalierungsstabilisierung usw.) ist der gleichzeitige Nachweis des Grundwellensignals und der 1. Oberwelle.

Eine Vorrichtung dieser Art erfordert den bekannten, in Fig. 2 dargestellten, Aufbau. Neben den Ermittlungen des Ausgangssignals $U_1$ wird zusätzlich bei der doppelten Generatorfrequenz eine phasenempfindliche Gleichrichtung vorgenommen. Der von dem Referenzsignal des Frequenzverdopplers 10 gesteuerte Gleichrichter 11 bildet ein Ausgangssignal $U_2$ der ersten Oberwelle. Für das Oberwellensignal $U_2$ gilt:

$$U_2 \sim J_2(2\Psi_m) \cdot \cos K\Omega \qquad (2)$$

$J_2$ : Besselfunktion 2. Ordnung

Bei den üblichen Modulationsanordnungen wird der Modulationshub $2\Psi_m$ so eingestellt, daß er bei dem Maximum der Besselfunktion 1. Ordnung liegt. Für den Oberwellennachweis müßte der Modulationshub andere Werte annehmen, um höchste Empfindlichkeit und Stabilität zu erreichen; in der in Fig. 4 gezeigten Darstellung wäre der Modulationshub $2\Psi_m$ für diesen Fall 3,1. Hier hat die Besselfunktion 2. Ordnung ihr erstes Maximum, die Ableitung zeigt nachfolgende Formel (3):

$$\frac{dJ_2}{d\Psi_m} \, (2\Psi_m = 3,1) = 0 \qquad (3)$$

Damit wird deutlich, daß für $2\Psi_m = 3,1$ kleine Änderungen des Modulationshubes keinen Einfluß auf das Ausgangssignal $U_2$ haben.

Allerdings läßt sich der Modulationshub in der Anordnung nach Fig. 2 nicht für beide Nachweisfunktionen gleichzeitig optimieren. Bei einer Einstellung des Modulationshubes wie in Fig. 4 gezeigt auf den Wert 1,85 würde der Arbeitspunkt A2 auf dem Kurvenbereich mit großer Steigung liegen. Hierbei entsteht der gravierende Nachteil, daß bereits kleinste Änderungen des Modulationshubes zu starken Skalierungsschwankungen der entsprechenden Nachweisfunktion führen. Zuätzlich ist die Empfindlichkeit reduziert.

Um aber eine hohe Empfindlichkeit und gute Stabilität zu erreichen, muß der Modulationshub für den Oberwellennachweis wie schon in Formel (3) beschrieben den Wert $2\Psi_m = 3,1$ annehmen (Fig. 4). Dort liegt für die Besselfunktion 2. Ordnung das 1. Maximum.

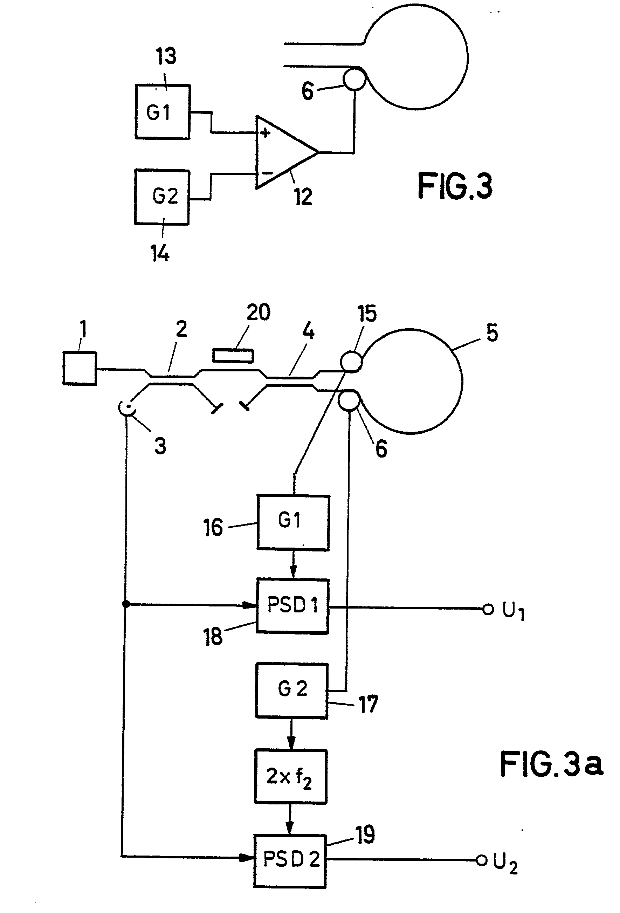

Zur unabhängigen Einstellung des Arbeitspunktes A1 im Grundwellennachweis und des Arbeitspunktes A3 im Oberwellennachweis (siehe Fig. 4) wird deshalb in dem Ausführungsbeispiel der Fig. 3 der Modulator 6 über einen Summierverstärker 12 mit zwei Frequenzen der Frequenzgeneratoren 13, 14 angesteuert.

Damit können die benötigten Modulationshübe für die Auswertung der Besselfunktionen 1. und 2. Ordnung unabhängig voneinander eingestellt werden.

Fig. 3a zeigt eine weitere Möglichkeit zur getrennten Einstellung der Modulationswerte. Der Aufbau des Faserkreisels entspricht im wesentlichen dem in Fig. 1 bzw. Fig. 2 gezeigten. Zusätzlich zu dem Modulator 6 ist ein weiterer Modulator 15 in dem Lichtweg angeordnet. Dieser Modulator 15 wird über den Frequenzgenerator 16 angesteuert, der Modulator 6 über den Frequenzgenerator 17. Die Modulatoren können damit auf unterschiedlichen Frequenzen und mit unterschiedlichen Modulationshüben arbeiten.

Das von der Fotodiode 3 gelieferte Signal wird dem Gleichrichter 18 zur Bildung des ersten Ausgangssignals $U_1$ und dem Gleichrichter 19 zur Bildung des zweiten Ausgangssignals $U_2$ zugeführt. Die Steuerung des Gleichrichters 18 erfolgt mittels der Frequenz des Generators 16, die des Gleichrichters 19 mittels der Frequenz des Generators 17 über eine Frequenzverdopplung. Damit ist das Ausgangssignal $U_1$ proportional der Besselfunktion 1. Ordnung bei maximaler Empfindlichkeit. Gleichzeitig kann unabhängig davon der Hub des Generators 17 auf einen Wert eingestellt werden, der eine maximale Amplitude des Ausgangssignals $U_2$ bei der Besselfunktion 2. Ordnung zuläßt. Nach Fig. 4 bedeutet dies die Arbeitspunkteinstellung in den Punkten A1 und A3. Selbstverständlich kann eine weitere Ergänzung durch zusätzliche Modulationsfrequenzen und die Auswertung von Besselfunktionen höherer Ordnung vorgenommen werden, die Erfindung beschränkt sich nicht nur auf die Auswertung zweier Ausgangssignale.

## Patentansprüche

1. Vorrichtung zur Messung der Drehgeschwindigkeit, enthaltend

1. eine Lichtleitfaser, die von zwei Lichtstrahlen gegensinnig durchlaufen wird, wobei diese nach Durchlaufen des geschlossenen Lichtweges einander überlagert werden,

2. eine Auswerteeinrichtung, die die durch den Sagnac-Effekt bedingte Phasenverschiebung auswertet,

3. eine in dem Lichtweg angeordnete Modulationseinrichtung, die mit zwei Modulationssignalen unterschiedlicher Frequenz angesteuert wird und Phasenmodulation des Lichts bewirkt, wobei die Frequenzen und die Modulationstiefen der beiden Modulationssignale unabhängig voneinander einstellbar sind,

dadurch gekennzeichnet, daß die Modulationswerte – Frequenz und Hub – des einen Modulationssignals derart gewählt sind, daß die Besselfunktion 1. Ordnung ein Maximum aufweist und die Modulationswerte des anderen Modulationssignals derart gewählt sind, daß die zugehörige Besselfunktion 2. Ordnung maximal ist.

2. Vorrichtung nach Anspruch 1, dadurch gekennzeichnet, daß beide Frequenzen überlagert auf eine Modulationseinrichtung (6) geschaltet sind.

3. Vorrichtung nach Anspruch 1, dadurch gekennzeichnet, daß die Frequenzen auf zwei getrennte Modulationseinrichtungen (6, 15) geschaltet sind.

4. Vorrichtung nach Anspruch 3, dadurch gekennzeichnet, daß die Modulationseinrichtungen (6, 15) thermisch verbunden sind.

5. Vorrichtung nach einem der vorherigen Ansprüche, dadurch gekennzeichnet, daß die Modulationseinrichtungen (6, 15) aus piezoelektrischen Elementen aufgebaut sind und einen Teil der Lichtleitfaser (5) in seiner Länge modulieren.

6. Vorrichtung nach einem der Ansprüche 1 bis 4, dadurch gekennzeichnet, daß die Modulationseinrichtungen (6, 15) integriert-optische Modulatoren sind.

## Claims

1. An apparatus for measuring the speed of rotation containing

1. an optical fibre through which two beams of light travel in opposite directions, these being superimposed one on the other after passage through the closed light path.

2. an evaluation device which evaluates the phase shift caused by the Sagnac effect,

3. a modulation device which is disposed in the light path and which is activated by two modulation signals of different frequency and causes phase modulation of the light, the frequencies and the depths of modulation of the two modulation signals being adjustable independently of one another,

characterised in that the modulation values - frequency and swing - of the one modulation signal are selected in such a manner that the Bessel function of the order has a maximum and the modulation values of the other modulation signal are selected in such a manner that the associated Bessel function of the order 2 is maximum.

2. An apparatus according to Claim 1, characterised in that the two frequencies are applied, superimposed, to a modulation device (6).

3. An apparatus according to Claim 1, characterised in that the frequencies are applied to two separate modulation devices (6, 15).

4. An apparatus according to Claim 3, characterised in that the modulation devices (6, 15) are thermally connected.

5. An apparatus according to any one of the preceding Claims, characterised in that the modulation devices (6, 15) are composed of piezoelectric elements and modulate the length of a part of the optical fibre (5).

6. An apparatus according to any one of Claims 1 to 4, characterised in that the modulation devices (6, 15) are integrated-optical modulators.

## Revendications

1. Dispositif pour mesurer la vitesse de rotation, comportant

1. une fibre conductrice de lumière qui est traversée en sens opposé par deux rayons lumineux qui, après avoir parcouru le chemin optique fermé, sont superposés mutuellement,

2. un dispositif d'exploitation qui interprète le déphasage produit par l'effet de Sagnac et

3. un dispositif de modulation placé dans le chemin optique, qui est piloté par deux signaux de modulation de fréquences différentes et produit la modulation de phase de la lumière, les fréquences et les profondeurs de modulation des deux signaux de modulation pouvant être ajustées indépendamment l'une de l'autre,

caractérisé en ce que les valeurs de modulation formées par la fréquence et l'amplitude d'un signal de modulation sont choisies de manière que la fonction de Bessel d'ordre premier présente un maximum et que les valeurs de modulation de l'autre signal de modulation sont choisies de manière que la fonction de Bessel correspondante du second ordre soit maximale.

2. Dispositif selon la revendication 1, caractérisé en ce que les deux fréquences sont appliquées à l'état superposé à un dispositif de modulation (6).

3. Dispositif selon la revendication 1, caractérisé en ce que les fréquenses sont appliquées à deux dispositifs de modulation séparés (6, 15).

4. Dispositif selon la revendication 3, caractérisé en ce que les dispositifs de modulation (6, 15) sont couplés thermiquement.

5. Dispositif selon l'une des revendications précédentes, caractérisé en ce que les dispositifs de modulation (6, 15) sont constitués d'éléments piézoélectriques et modulent une partie de la fibre conductrice de lumière (5) dans sa longueur.

6. Dispositif selon l'une des revendications 1 à 4, caractérisé en ce que les dispositifs de modulation (6, 15) sont des modulateurs optiques intégrés.

FIG.1

FIG.2

FIG.3

FIG.3a

FIG. 4